# EUROPEAN PATENT APPLICATION

(11) **EP 4 583 200 A1**
(43) Date of publication of application: **09.07.2025**
(21) Application number: 23924998.0
(22) Date of filing: 16.11.2023
(51) Int. Cl.: H01M 4/36, H01M 4/38, C01G 53/00

(54) **POSITIVE ELECTRODE MATERIAL AND PREPARATION METHOD THEREFOR, POSITIVE ELECTRODE SHEET, AND USE THEREOF**

(30) Priority: 01.03.2023 CN 202310186373
(71) Applicant: Contemporary Amperex Technology (Hong Kong) Limited, Central (HK)
(72) Inventor: YAN, Guanfusheng, Ningde, Fujian 352100 (CN); REN, Miaomiao, Ningde, Fujian 352100 (CN); JIN, Chao, Ningde, Fujian 352100 (CN); DAI, Zhipeng, Ningde, Fujian 352100 (CN); ZHONG, Ming, Ningde, Fujian 352100 (CN); WU, Zirui, Ningde, Fujian 352100 (CN)
(74) Representative: Jacob, Reuben Ellis
(86) International application number: PCT/CN2023/132006
(87) International publication number: WO 2024/179047

(57) **Abstract**

This application provides a positive electrode material and a preparation method therefor, positive electrode slurry, a positive electrode plate and a preparation method therefor, a secondary battery and a preparation method therefor, and a power consuming apparatus. The positive electrode material includes a positive electrode active material and a cladding layer located on at least a part of a surface of the positive electrode active material. The positive electrode active material includes a material whose chemical formula is LiNi₁₋ₓMₓO₂, 0≤x≤0.2, M includes at least one of Co, Mn, Al, Fe, Cu, and V, and the cladding layer includes at least one of a sulfur element, a selenium element, and a tellurium element. When the positive electrode material is used to prepare a secondary battery, the cladding layer may react with a lithium impurity of the positive electrode active material, to reduce a lithium impurity content of the positive electrode active material of the secondary battery and improve cycle performance of the battery.

## Description

### CROSS-REFERENCE TO RELATED APPLICATIONS

This application claims priority to Chinese Patent Application No. 2023101863731, entitled "POSITIVE ELECTRODE MATERIAL AND PREPARATION METHOD THEREFOR, POSITIVE ELECTRODE PLATE, AND USE THEREOF" and filed on March 1, 2023.

### TECHNICAL FIELD

This application relates to the field of secondary battery technologies, and in particular, to a positive electrode material and a preparation method therefor, a positive electrode plate, a secondary battery and a preparation method therefor, and a power consuming apparatus.

### BACKGROUND

Descriptions herein merely provide background information related to this application, but do not necessarily constitute the prior art.

In a secondary battery, a positive electrode active material with a high content of nickel has a high specific capacity, but also has a high lithium impurity content. The high lithium impurity content has an adverse impact on performance of the battery.

### SUMMARY

This application provides a positive electrode material, including a positive electrode active material and a cladding layer located on at least a part of a surface of the positive electrode active material. The positive electrode active material includes a material whose chemical formula is LiNi₁₋ₓMₓO₂, 0≤x≤0.2, M includes at least one of Co, Mn, Al, Fe, Cu, and V, and the cladding layer includes at least one of a sulfur element, a selenium element, and a tellurium element.

The positive electrode material includes the positive electrode active material with a high content of nickel and the cladding layer located on at least a part of the surface of the positive electrode active material. In the positive electrode material, the cladding layer including at least one of the sulfur element, the selenium element, and the tellurium element is introduced to the surface of the positive electrode active material. When the positive electrode material is used to prepare a secondary battery, the cladding layer may react with a lithium impurity of the positive electrode active material, to reduce a lithium impurity content of the positive electrode active material of the secondary battery and improve cycle performance of the battery.

In some implementations, 0≤x≤0.1.

In some implementations, M includes Co and Mn.

In some implementations, an atomic ratio of Co to Mn is equal to 1:1.

In some implementations, a lithium impurity content of the positive electrode active material is 0.5% to 0.7%.

In some implementations, the lithium impurity content of the positive electrode active material is 0.55% to 0.65%.

In some implementations, the positive electrode active material includes primary particles and secondary particles obtained through agglomeration of the primary particles.

In some implementations, Dv50 of the primary particle is 3 µm to 10 µm, and Dv50 of the secondary particle is 5 µm to 20 µm.

In some implementations, a mass ratio of the primary particles to the secondary particles is 1:9 to 4:6.

In some implementations, the cladding layer includes at least one of a sulfur elementary substance, a selenium elementary substance, and a tellurium elementary substance.

In some implementations, a thickness of the cladding layer is 100 nm to 1000 nm.

In some implementations, a percentage for which a mass of the cladding layer accounts in a total mass of the positive electrode active material and the cladding layer is 0.01% to 6%.

In some implementations, the percentage for which the mass of the cladding layer accounts in the total mass of the positive electrode active material and the cladding layer is 0.1% to 1%.

This application further provides a preparation method for a positive electrode material. The preparation method includes the following steps:

mixing a positive electrode active material with a material of a cladding layer, to obtain a mixed material, where the positive electrode active material includes a material whose chemical formula is LiNi₁₋ₓMₓO₂, 0≤x≤0.2, M includes at least one of Co, Mn, Al, Fe, Cu, and V, and the material of the cladding layer includes at least one of a sulfur element, a selenium element, and a tellurium element; and

performing sintering treatment on the mixed material in an atmosphere of protective gas.

In some implementations, a sintering temperature of the sintering treatment was 250°C to 350°C.

In some implementations, sintering duration of the sintering treatment was 3 h to 10 h.

In some implementations, Dv50 of the material of the cladding layer was less than or equal to 2 µm.

In some implementations, before the performing sintering treatment on the mixed material, the preparation method further includes: performing grinding treatment on the mixed material.

In some implementations, Dv50 of a mixed material obtained after the grinding treatment was 10 µm to 20 µm.

This application further provides a positive electrode plate, including a positive electrode current collector and a positive electrode film layer located on at least one surface of the positive electrode current collector. The positive electrode film layer includes the foregoing positive electrode material or a positive electrode material prepared by using the foregoing preparation method for a positive electrode material.

This application further provides a secondary battery, including the foregoing positive electrode plate. A surface of a positive electrode active material of the positive electrode plate has an electrolyte interphase film, and the electrolyte interphase film includes at least one of lithium sulfate, lithium selenide, and lithium tellurate.

In some implementations, a thickness of the electrolyte interphase film is 5 nm to 20 nm.

This application further provides a preparation method for a secondary battery. The preparation method includes the following steps:

performing formation treatment on a secondary-battery preform on which the foregoing positive electrode plate is assembled, to form an electrolyte interphase film on a surface of a positive electrode active material of the positive electrode plate, where the electrolyte interphase film includes at least one of lithium sulfate, lithium selenide, and lithium tellurate.

In some implementations, a cut-off voltage of the formation treatment was 3.8 V to 4.1 V

In some implementations, a formation current of the formation treatment was 0.08 C to 0.15 C.

This application further provides a power consuming apparatus, including the foregoing secondary battery or a secondary battery prepared by using the foregoing preparation method for a secondary battery.

### BRIEF DESCRIPTION OF THE DRAWINGS

To describe the technical solutions of this application more clearly, the following briefly describes the accompanying drawings used in this application. It is clear that the accompanying drawings described below are merely some implementations of this application, and a person of ordinary skill in the art may further derive other drawings based on the accompanying drawings without creative efforts.
FIG. 1 is a schematic diagram of preparation of a positive electrode material according to an implementation of this application;
FIG. 2 is a schematic diagram of a secondary battery according to an implementation of this application;
FIG. 3 is an exploded view of a secondary battery according to an implementation of this application shown in FIG. 2;
FIG. 4 is a schematic diagram of a power consuming apparatus in which a secondary battery serves as a power supply according to an implementation of this application;
FIG. 5 is a schematic diagram of positive electrode slurry according to Example 1 of this application;
FIG. 6 is a schematic diagram of positive electrode slurry according to a comparative example 1 of this application;
FIG. 7 is a schematic diagram of positive electrode slurry according to a comparative example 3 of this application;
FIG. 8 shows viscosity change curves of the positive electrode slurry according to Example 1 and the positive electrode slurry according to the comparative example 1 of this application; and
FIG. 9 is a transmission electron microscopy image (TEM image) of a positive electrode plate obtained after formation according to Example 1 of this application.

### Reference numerals:

5. secondary battery; 51. housing; 52. electrode assembly; 53. cover plate; and 6. power consuming apparatus.

To better describe and illustrate invention embodiments and/or examples disclosed herein, refer to one or more accompanying drawings. Additional details or examples for describing the accompanying drawings should not be considered as limitations to scopes of any one of the disclosed invention, the currently described embodiments and/or examples, and currently understood optimal modes of the present invention.

### DETAILED DESCRIPTION

For ease of understanding this application, this application is described more comprehensively below with reference to the related accompanying drawings. The accompanying drawings provide preferred embodiments of this application. However, this application can be implemented in many different forms, and is not limited to the embodiments described in this application. On the contrary, an objective of providing these embodiments is to achieve a clearer and more comprehensive understanding of disclosed content of this application.

Unless otherwise defined, all technical and scientific terms used in this specification have same meanings as those commonly understood by a person skilled in the art belonging to this application. Terms used in this specification of this application in this specification are only intended to describe specific embodiments, and are not intended to limit this application. The term "and/or" used in this specification includes any and all combinations of one or more relevant items listed.

A "range" disclosed in this application is defined in a form of a lower limit and an upper limit. A given range is defined by selecting a lower limit and an upper limit, and the selected lower limit and upper limit define boundaries of a particular range. A range defined in this manner may be inclusive or exclusive of end values, and may be arbitrarily combined, that is, any lower limit may be combined with any upper limit to form a range. For example, if a range of 60 to 120 and a range of 80 to 110 are listed for a particular parameter, it is understood that a range from 60 to 110 and a range from 80 to 120 are also contemplated. In addition, if minimum range values of 1 and 2 are listed and maximum range values of 3, 4, and 5 are listed, the following ranges are all contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a to b, where both a and b are real numbers. For example, a numerical range "0 to 5" represents that all real numbers between "0 to 5" have been listed in this specification, and "0 to 5" is just an abbreviated representation of a combination of these numerical values. In addition, when it is stated that a parameter is an integer greater than or equal to 2, it is equivalent to disclosing that the parameter is, for example, an integer such as 2, 3, 4, 5, 6, 7, 8, 9, 10, 11, and 12.

Unless otherwise specified, all embodiments and optional embodiments of this application may be combined with each other to form new technical solutions.

Unless otherwise specified, all technical features and optional technical features of this application may be combined with each other to form new technical solutions.

Unless otherwise specified, all steps of this application may be performed sequentially or randomly. In some embodiments, the steps are performed sequentially. For example, the phrase "the method includes step (a) and step (b)" means that the method may include step (a) and step (b) performed sequentially, or may include step (b) and step (a) performed sequentially. For example, the phrase "the method may further include step (c)" means that step (c) may be added to the method in any order. For example, the method may include step (a), step (b), and step (c), or may include step (a), step (c), and step (b), or may include step (c), step (a), and step (b).

Unless otherwise specified, the terms such as "include", "comprise", and their variants mentioned in this application may be open-ended or closed-ended. For example, the terms such as "include", "comprise", and their variants may mean that other components not listed may be further included or comprised, or only the listed components may be included or comprised.

Unless otherwise specified, the term "or" is inclusive in this application. For example, a phrase "A or B" means "A, B, or both A and B". More specifically, the condition "A or B" is satisfied when any one of the following conditions is satisfied: A is true (or present) and B is false (or absent); A is false (or absent) and B is true (or present); or both A and B are true (or present).

Unless otherwise specified, the terms used in this application have well known meanings as commonly understood by a person skilled in the art. Unless otherwise specified, values of parameters mentioned in this application may be measured by using various measurement methods commonly used in the art. For example, the values may be tested according to the method provided in the embodiments of this application.

An implementation of this application provides a positive electrode material, including a positive electrode active material and a cladding layer located on at least a part of a surface of the positive electrode active material. The positive electrode active material includes a material whose chemical formula is LiNi₁₋ₓMₓO₂, 0≤x≤0.2, M includes at least one of Co, Mn, Al, Fe, Cu, and V, and the cladding layer includes at least one of a sulfur element, a selenium element, and a tellurium element. In the positive electrode material, the positive electrode material includes the positive electrode active material with a high content of nickel and the cladding layer located on at least a part of the surface of the positive electrode active material. In the positive electrode material, the cladding layer including at least one of the sulfur element, the selenium element, and the tellurium element is introduced to the surface of the positive electrode active material. When the positive electrode material is used to prepare a secondary battery, the cladding layer may react with a lithium impurity of the positive electrode active material, to reduce a lithium impurity content of the positive electrode active material of the secondary battery and improve cycle performance of the battery.

Specifically, when the positive electrode material is used in the secondary battery, when positive electrode slurry is prepared, the cladding layer may initially react with the lithium impurity of the positive electrode active material, to reduce the lithium impurity content. In addition, an intermediate product generated when the cladding layer reacts with the lithium impurity of the positive electrode active material can improve flowability of the slurry and improve coating performance of the slurry.

Further, when the positive electrode material is used in the secondary battery, the intermediate product is electrochemically oxidized at a formation stage, and may further react with the lithium impurity, to generate an electrolyte interphase film (CEI film). In this way, stability of a surface structure of the positive electrode active material can be improved, a side reaction between the positive electrode material and an electrolyte solution is reduced, an internal impedance of the battery is reduced, and the cycle performance of the battery is further improved. In addition, the lithium impurity may be converted into a lithium ion through electrochemical oxidation at the formation stage. The lithium ion obtained through conversion may be used to compensate for a lithium-ion loss caused by formation of a solid electrolyte interphase film (SEI film), so that secondary use of the lithium impurity can be implemented, and a capacity of the battery is improved.

Still further, when the positive electrode material is used in the secondary battery, the cladding layer may react with a solvent in the electrolyte solution through reduction and oxidation, to generate a poly(ethylene oxide) (PEO)-type polymer and lithium alkoxide, to relieve volume expansion during charging of an electrode, and also form a conductive network for rapidly transmitting the lithium ion. In this way, the cycle performance of the battery can be further improved.

Using sulfur in the cladding layer as an example, when the positive electrode slurry is prepared, a reaction between the cladding layer and the lithium impurity of the positive electrode active material may be represented by a formula (1).

4LiMO₂+2S → 4MO+Li₂S₂O₃+Li₂O formula (1).

M includes at least one of Co, Mn, Al, Fe, Cu, and V. It can be learned from the formula (1) that, when the positive electrode material is used for preparing the positive electrode slurry, the sulfur may initially react with the lithium impurity of the positive electrode active material, to reduce the lithium impurity content. In addition, an intermediate product lithium thiosulfate generated when the sulfur reacts with the lithium impurity on the surface of the positive electrode active material can improve the flowability of the slurry and improve the coating performance of the slurry.

Further, when the positive electrode material is used to prepare the secondary battery, reactions that occur at the formation stage may be represented by a formula (2) and a formula (3).

Li₂S₂O₃+Li₂CO₃-8e⁻ → 2 Li₂SO₄+5CO₂+8Li⁺ formula (2).

2LiMO₂+S+2Li₂CO₃-4e⁻→2MO+Li₂SO₄+2CO₂+4Li⁺ formula (3).

It can be learned from the formula (2) and the formula (3) that, at the formation stage, Li₂S₂O₃ may be electrochemically oxidized to Li₂SO₄, residual lithium compounds such as Li₂O and Li₂CO₃ on the surface are removed, and generated CO₂ may be released together with other gas formed in a battery formation process.

It can be learned from the formula (1), the formula (2), and the formula (3) that, the sulfur reduces LiMO₂, to form an MO protective layer on a particle surface of the positive electrode active material, and removes the residual lithium compounds (RLCs) such as Li₂O and Li₂CO₃ from a particle surface of LiMO₂. In addition, an electrochemically stable Li₂SO₄ CEI film exists on the particle surface of LiMO₂ or exists alone, and a lithium ion released due to a sulfur reaction may be used to compensate for the lithium-ion loss caused by the formation of the SEI film.

In some implementations, x may be 0, 0.02, 0.05, 0.08, 0.1, 0.12, 0.15, 0.18, 0.2, or the like. 0≤x≤0.2 corresponds to the positive electrode active material with a high content of nickel. In this case, the lithium impurity content of the positive electrode active material is high. The cladding layer is disposed in this application, so that when the positive electrode material is used in a battery, the lithium impurity content of the active material can be effectively reduced, to help improve performance of the battery. Optionally, 0≤x≤0.1.Further optionally, LiNi₁₋ₓMₓO₂ may be LiNi_{0.8}M_{0.2}O₂, LiNi_{0.85}M_{0.15}O₂, LiNi_{0.9}M_{0.1}O₂, LiNi_{0.95}M_{0.05}O₂, or the like. Further optionally, the positive electrode active material is selected from lithium nickel cobalt manganate, lithium nickel cobalt aluminate, lithium nickel manganese oxide, and nickel-rich layered oxide.

In some implementations, M includes Co and Mn. Further, an atomic ratio of Co to Mn is equal to 1:1. In this case, the positive electrode active material may be LiNi_{0.9}Co_{0.05}Mn_{0.05}O₂ or LiNi_{0.8}Co_{0.1}Mn_{0.1}O₂.

In some implementations, the chemical formula of the positive electrode active material is LiNi₁₋ₓMₓO₂, where 0≤x≤0.2, and M includes at least one of Co, Mn, Al, Fe, Cu, and V. Optionally, 0≤x≤0.1.Further optionally, M includes Co and Mn. Further optionally, an atomic ratio of Co to Mn is equal to 1:1.

In some implementations, the lithium impurity content of the positive electrode active material is 0.5% to 0.7%. For example, the lithium impurity content of the positive electrode active material is 0.5%, 0.55%, 0.6%, 0.65%, or 0.7%. When the positive electrode active material has a high content of nickel, the corresponding lithium impurity content is high. When the lithium impurity content is within this range, the cladding layer and the positive electrode active material can better cooperate, so that the lithium impurity content is reduced to a low content, to improve the performance of the battery. Optionally, the lithium impurity content of the positive electrode active material is 0.55% to 0.65%.

In some implementations, the positive electrode active material includes primary particles and secondary particles obtained through agglomeration of the primary particles. Use of the primary particles and the secondary particles enables the positive electrode plate to have a high compaction density.

Optionally, a mass ratio of the primary particles to the secondary particles is 1:9 to 4:6. For example, the mass ratio of the primary particles to the secondary particles is 1:9, 2:8, 3:7, or 4:6.

In some implementations, Dv50 of the primary particle is 3 micrometers (µm) to 10 µm, and Dv50 of the secondary particle is 5 µm to 20 µm. Further optionally, the Dv50 of the primary particle is 3 µm, 4 µm, 5 µm, 6 µm, 7 µm, 8 µm, 9 µm, or 10 µm. The Dv50 of the secondary particle is 5 µm, 6 µm, 7 µm, 8 µm, 9 µm, 10 µm, 11 µm, 12 µm, 13 µm, 14 µm, 15 µm, or the like.

It may be understood that, in this application, the Dv50 refers to a particle size corresponding to a case that accumulative particle-size distribution of particles reaches 50% in an accumulative volume distribution curve, and a physical meaning of the Dv50 is that particles whose particle size is less than (or greater than) the Dv50 occupy 50%. For example, the Dv50 may be conveniently measured by using a laser particle-size analyzer, for example, a Mastersizer 2000E laser particle-size analyzer of Malvern Panalytical limited company, UK, with reference to GB/T 19077-2016 particle-size analysis laser diffraction methods.

In some implementations, the cladding layer includes at least one of a sulfur elementary substance, a selenium elementary substance, and a tellurium elementary substance.

In some implementations, the cladding layer is located on a surface of a particle of the positive electrode active material. Further, a surface of each particle of the positive electrode active material has the cladding layer. In this way, the cladding layer can better react with the positive electrode active material, to further reduce the lithium impurity content of the positive electrode active material.

In some implementations, the cladding layer coats the entire positive electrode active material. In this case, the cladding layer and the impurity lithium content of the positive electrode active material more fully interact, to further reduce the lithium impurity content.

In some optional examples of the cladding layer, a thickness of the cladding layer is 100 nanometers (nm) to 1000 nm. Further optionally, the thickness of the cladding layer is 100 nm, 200 nm, 300 nm, 400 nm, 500 nm, 600 nm, 700 nm, 800 nm, 900 nm, 1000 nm, or the like.

In some implementations, a percentage for which a mass of the cladding layer accounts in a total mass of the positive electrode active material and the cladding layer is 0.01% to 6%. When the percentage of the mass of the cladding layer is excessively high, when a secondary battery is prepared, a large quantity of cladding layers may exist on the surface of the positive electrode active material. Consequently, an impedance of the surface of the positive electrode active material may deteriorate, affecting a function of a capacity of the active material and cycle stability of the battery. When the percentage of the mass of the cladding layer is excessively low, the residual lithium compounds (RLCs) incompletely react, and the remaining RLCs may deteriorate an impedance and increase polarization, reducing a capacity of the battery. In addition, a side reaction between a positive electrode and an interface of an electrolyte solution may be enhanced, and consequently, the life and performance of the battery deteriorate. Optionally, the percentage for which the mass of the cladding layer accounts in the total mass of the positive electrode active material and the cladding layer is 0.01%, 0.05%, 0.1%, 0.2%, 0.5%, 0.8%, 1%, 1.2%, 1.5%, 1.8%, 2%, 2.2%, 2.5%, 2.8%, 3%, 3.5%, 4%, 4.5%, 5%, 5.5%, 6%, or the like. Further optionally, the percentage for which the mass of the cladding layer accounts in the total mass of the positive electrode active material and the cladding layer is 0.1% to 1%.

Another implementation of this application provides a preparation method for a positive electrode material. The preparation method for a positive electrode material includes the following steps: mixing a positive electrode active material with a material of a cladding layer, to obtain a mixed material, where the positive electrode active material includes a material whose chemical formula is LiNi₁₋ₓMₓO₂, 0≤x≤0.2, M includes at least one of Co, Mn, Al, Fe, Cu, and V, and the material of the cladding layer includes at least one of a sulfur element, a selenium element, and a tellurium element; and performing sintering treatment on the mixed material in an atmosphere of protective gas. According to the preparation method, the positive electrode material including the positive electrode active material and the cladding layer located on at least a part of a surface of the positive electrode active material can be obtained. The preparation method is simple and easy, and is convenient to be promoted.

It may be understood that, in the preparation method of this implementation, a temperature of a product obtained after the sintering treatment was reduced to a room temperature, and the granular positive electrode material may be obtained. Optionally, after the temperature was reduced to the room temperature, the positive electrode material satisfying a particle-size requirement may be obtained through screening based on a requirement. It may be further understood that, unless otherwise specified, in this application, the term "room temperature" generally refers to 4 degrees Celsius (°C) to 30°C, optionally, refers to 25±5°C.

In some implementations, a sintering temperature of the sintering treatment was 250°C to 350°C. Optionally, the sintering temperature of the sintering treatment was 250°C, 260°C, 270°C, 280°C, 290°C, 300°C, 310°C, 320°C, 330°C, 340°C, 350°C, or the like. When the sintering temperature is within this range, combination of the positive electrode active material and the material of the cladding layer was facilitated, and the positive electrode material with better performance was obtained.

In some implementations, sintering duration of the sintering treatment was 3 hours (h) to 10 h. Optionally, the sintering duration of the sintering treatment was 3 h, 4 h, 5 h, 6 h, 7 h, 8 h, 9 h, 10 h, or the like. Optionally, the protective gas included at least one of nitrogen, helium, neon, argon, and xenon.

Further optionally, the sintering treatment may be performed in a tube furnace.

In some implementations, Dv50 of the material of the cladding layer was less than or equal to 2 µm. When a particle size of the material of the cladding layer was within this range, the cladding layer can be well attached to the surface of the positive electrode active material, to help form the cladding layer on the surface of the positive electrode active material. In addition, a good binding force can be further formed between the positive electrode active material and the cladding layer. Optionally, the Dv50 of the material of the cladding layer may be, but was not limited to, 0.1 µm, 0.2 µm, 0.3 µm, 0.4 µm, 0.5 µm, 0.6 µm, 0.7 µm, 0.8 µm, 0.9 µm, 1 µm, 1.1 µm, 1.2 µm, 1.3 µm, 1.4 µm, 1.5 µm, 1.6 µm, 1.7 µm, 1.8 µm, 1.9 µm, 2 µm, or the like.

In some implementations, the material of the cladding layer included at least one of a sulfur elementary substance, a selenium elementary substance, and a tellurium elementary substance.

Optionally, before sintering treatment is performed on the mixed material, the preparation method further includes: performing grinding treatment on the mixed material. Further optionally, grinding treatment was performed through ball milling. Duration of the ball milling was 5 h to 8 h, and a rotational speed of the ball milling was 150 r/min to 250 r/min. Still further optionally, the duration of the ball milling was 5 h, 6 h, 7 h, 8 h, or the like. The rotational speed of the ball milling was 150 revolutions/minute (r/min), 160 r/min, 170 r/min, 180 r/min, 190 r/min, 200 r/min, 210 r/min, 220 r/min, 230 r/min, 240 r/min, 250 r/min, or the like.

In some implementations, Dv50 of a mixed material obtained after the grinding treatment was 10 µm to 20 µm. For example, the Dv50 of the mixed material obtained after the grinding treatment was 10 µm, 12 µm, 15 µm, 18 µm, or 20 µm. The Dv50 of the mixed material obtained after the grinding treatment was controlled to be in the range of 10 µm to 20 µm, to help improve sintering fullness, improve a sintering effect, and obtain the positive electrode material with good performance.

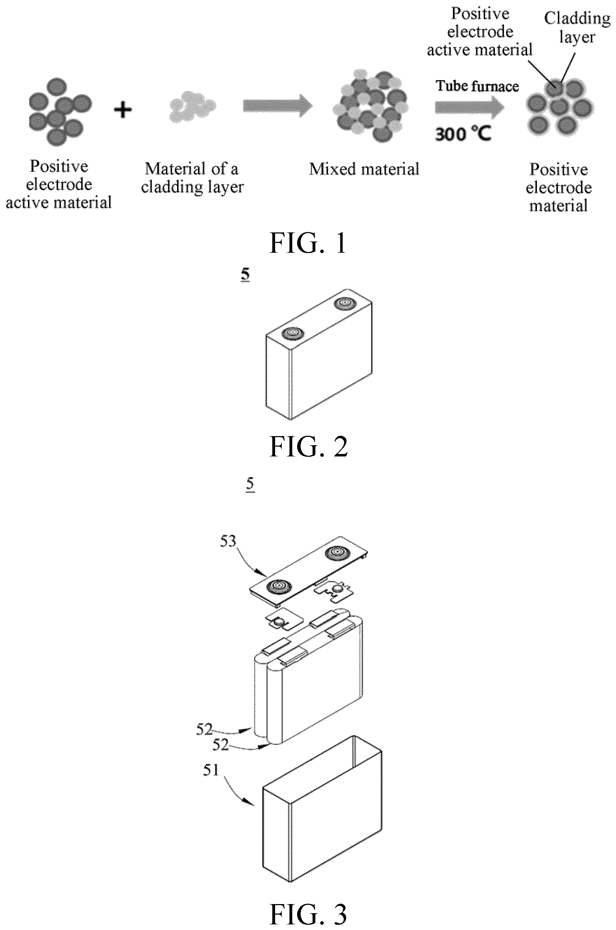

FIG. 1 is a schematic diagram of preparation of a positive electrode material according to an implementation of this application. In a preparation process, a positive electrode active material and a material of a cladding layer were mixed to obtain a mixed material. Grinding treatment was performed on the mixed material. Then, argon was introduced into a tube furnace, and sintering was performed at a temperature of 300°C for 6 h. The temperature was reduced to a room temperature after the sintering, and a granular positive electrode material may be obtained.

Another implementation of this application provides positive electrode slurry. The positive electrode slurry includes the foregoing positive electrode material or a positive electrode material prepared by using the foregoing preparation method for a positive electrode material.

Optionally, the positive electrode slurry may further include at least one of a conductive agent, a binder, and a solvent.

Another implementation of this application provides a positive electrode plate. The positive electrode plate includes a positive electrode current collector and a positive electrode film layer located on at least one surface of the positive electrode current collector. The positive electrode film layer includes the foregoing positive electrode material or a positive electrode material prepared by using the foregoing preparation method for a positive electrode material.

Another implementation of this application provides a preparation method for a positive electrode plate. The preparation method for a positive electrode plate includes the following steps: transferring the foregoing positive electrode slurry to at least one surface of a positive electrode current collector and curing the positive electrode slurry, to form a positive electrode film layer on the corresponding surface of the positive electrode current collector.

Another implementation of this application provides a secondary battery. The secondary battery includes the foregoing positive electrode plate or a positive electrode plate prepared by using the foregoing preparation method for a positive electrode plate. A surface of a positive electrode active material of the positive electrode plate has an electrolyte interphase film (CEI film), and the electrolyte interphase film includes at least one of lithium sulfate, lithium selenide, and lithium tellurate. The existence of the electrolyte interphase film helps improve stability of a surface structure of the positive electrode active material and reduce a side reaction between the positive electrode plate and an electrolyte solution, and helps improve cycle performance of the battery.

In some implementations, a thickness of the electrolyte interphase film is 5 nm to 20 nm. Optionally, the thickness of the electrolyte interphase film is 5 nm, 8 nm, 10 nm, 12 nm, 15 nm, 18 nm, 20 nm, or the like.

Optionally, as a negative electrode of the secondary battery, a negative electrode active material of the secondary battery includes at least one of graphite and a silicon-based material. Further optionally, when the negative electrode active material includes the graphite and the silicon-based material, a percentage for which a mass of the silicon-based material accounts in a mass of the negative electrode active material is less than or equal to 50%.

Optionally, as an electrolyte solution of the secondary battery, the electrolyte solution includes lithium salt. Optionally, the lithium salt may be selected from one or more of LiTFSI, LiFSI, LiN(CₐF₂ₐ₊₁SO₂)(C_{b}F_{2b+1}SO₂), LiPF₆, LiBF₄, LiBOB, LiAsF₆, LiCF₃SO₃, and LiClO₄, where a and b are natural numbers.

Optionally, the electrolyte solution includes a non-aqueous organic solvent, and the non-aqueous organic solvent may be selected from one or more of ethylene carbonate, propylene carbonate, dimethyl carbonate, diethyl carbonate, and ethyl methyl carbonate.

An embodiment of this application provides a preparation method for a secondary battery. The preparation method for a secondary battery includes the following steps: performing formation treatment on a secondary-battery preform on which the foregoing positive electrode plate or a positive electrode plate prepared by using the foregoing preparation method for a positive electrode plate is assembled, to form an electrolyte interphase film on a surface of a positive electrode active material of the positive electrode plate, where the electrolyte interphase film includes at least one of lithium sulfate, lithium selenide, and lithium tellurate.

It may be understood that the secondary-battery preform represented a battery product before formation.

Optionally, a cut-off voltage of the formation treatment was 3.8 volts (V) to 4.1 V. Further optionally, the cut-off voltage of the formation treatment was 3.8 V, 3.9 V, 4.0 V, 4.1 V, or the like. Use of the high formation cut-off voltage was more beneficial to formation of the CEI film, improved a conversion rate of a lithium impurity, and further improved cycle performance of a battery.

Optionally, a formation current of the formation treatment was 0.08 C to 0.15 C. Further optionally, the formation current of the formation treatment was 0.08 C, 0.09 C, 0.1 C, 0.12 C, 0.13 C, 0.14 C, 0.15 C, or the like.

Another embodiment of this application provides a power consuming apparatus. The power consuming apparatus includes the foregoing secondary battery or a secondary battery prepared by using the foregoing preparation method for a secondary battery.

The secondary battery and the power consuming apparatus of this application are described below with proper reference to the accompanying drawings.

A secondary battery usually includes a positive electrode plate, a negative electrode plate, an electrolyte, and a separator. During charging and discharging of the battery, an active ion is repeatedly intercalated and deintercalated between the positive electrode plate and the negative electrode plate. The electrolyte transmits an ion between the positive electrode plate and the negative electrode plate. The separator is disposed between the positive electrode plate and the negative electrode plate, mainly has a function of preventing a short circuit between a positive electrode and a negative electrode, and can enable an ion to pass through.

### Positive electrode plate

The positive electrode plate includes a positive electrode current collector and a positive electrode film layer disposed on at least one surface of the positive electrode current collector. The positive electrode film layer includes a positive electrode active material.

For example, the positive electrode current collector has two surfaces opposite to each other in a thickness direction of the positive electrode current collector, and the positive electrode film layer is disposed on either or both of the two opposite surfaces of the positive electrode current collector.

In some implementations, the positive electrode current collector may be a metal foil or a composite current collector. For example, an aluminum foil may be used as the metal foil. The composite current collector may include a polymer material substrate and a metal layer formed on at least one surface of the polymer material base. The composite current collector may be formed by forming a metal material on the polymer material substrate. Optionally, the metal material may include, but is not limited to, one or more of aluminum, aluminum alloy, nickel, nickel alloy, titanium, titanium alloy, silver, and silver alloy. Optionally, the polymer material substrate may include, but is not limited to, one or more of polypropylene (PP), polyethylene terephthalate (PET), polybutylene terephthalate (PBT), polystyrene (PS), and polyethylene (PE).

In an example, the positive electrode active material may include a positive electrode active material that is known in the art and that is used in a battery. In an example, the positive electrode active material may include at least one of the following materials: a lithium-containing phosphate of an olivine structure, a lithium transition metal oxide, and their respective modified compounds. However, this application is not limited to these materials, and another conventional material that can be used as a positive electrode active material of a battery may alternatively be used. Only one of these positive electrode active materials may be used, or two or more of these positive electrode active materials may be used in combination. An example of the lithium transition metal oxide may include, but is not limited to, at least one of a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, and their modified compounds. Optionally, the lithium cobalt oxide includes LiCoO₂. The lithium nickel oxide includes LiNiO₂. The lithium manganese oxide includes at least one of LiMnO₂ and LiMn₂O₄. The lithium nickel cobalt manganese oxide includes at least one of LiNi_{1/3}Co_{1/3}Mn_{1/3}O₂ (NCM₃₃₃), LiNi_{0.5}Co_{0.2}Mn_{0.3}O₂ (NCM₅₂₃), LiNi_{0.5}Co_{0.25}Mn_{0.25}O₂ (NCM₂₁₁), LiNi_{0.6}Co_{0.2}Mn_{0.2}O₂ (NCM₆₂₂), and LiNi_{0.8}Co_{0.1}Mn_{0.1}O₂ (NCM₈₁₁). The lithium nickel cobalt aluminum oxide includes LiNi_{0.85}Co_{0.15}Al_{0.05}O₂. An example of the lithium-containing phosphate of the olivine structure may include, but is not limited to, at least one of lithium iron phosphate, a composite material of lithium iron phosphate and carbon, lithium manganese phosphate, a composite material of lithium manganese phosphate and carbon, lithium manganese iron phosphate, and a composite material of lithium manganese iron phosphate and carbon. Optionally, the lithium iron phosphate includes LiFePO₄ (LFP). The lithium manganese phosphate includes LiMnPO₄. A weight ratio of the positive electrode active material in the positive electrode film layer is 80 weight% (wt%) to 100 weight% based on a total weight of the positive electrode film layer.

In some implementations, the positive electrode film layer optionally further includes a binder. In an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin. A weight ratio of the binder in the positive electrode film layer is 0 weight% to 20 weight% based on the total weight of the positive electrode film layer.

In some implementations, the positive electrode film layer optionally further includes a conductive agent. In an example, the conductive agent may include at least one of superconducting carbon, acetylene black, carbon black, Ketjen black, a carbon dot, a carbon nanotube, graphene, and a carbon nanofiber. A weight ratio of the conductive agent in the positive electrode film layer is 0 weight% to 20 weight% based on the total weight of the positive electrode film layer.

In some implementations, the positive electrode plate may be prepared in the following manner: The foregoing components for preparing the positive electrode plate, such as the positive electrode active material, the conductive agent, the binder, and any other components were dispersed in a solvent, to form positive electrode slurry. Optionally, the solvent included N-methylpyrrolidone. A solid content of the positive electrode slurry was 40 wt% to 80 wt%, and a viscosity of the positive electrode slurry at a room temperature was adjusted to 5000 millipascal per second (mPa·s) to 25000 mPa·s. The positive electrode slurry was applied on a surface of the positive electrode current collector, dried, and then cold-pressed by a cold rolling mill, to form the positive electrode plate. A unit coating surface density of positive electrode powders was 150 milligrams/square meter (mg/m²) to 350 mg/m². A compaction density of the positive electrode plate was 3.0 grams/cubic centimeter (g/cm³) to 3.6 g/cm³, optionally, 3.4 g/cm³ to 3.6 g/cm³. A calculation formula of the compaction density was: compaction density=coating surface density/(thickness of the pressed electrode plate-thickness of the current collector).

It may be understood that the positive electrode plate in this embodiment of this application may be made by using the foregoing positive electrode plate as a positive electrode plate body and forming a solid electrolyte interphase film on a surface of the positive electrode plate body.

### Negative electrode plate

The negative electrode plate includes a negative electrode current collector and a negative electrode film layer disposed on at least one surface of the negative electrode current collector. The negative electrode film layer includes a negative electrode active material.

For example, the negative electrode current collector has two surfaces opposite to each other in a thickness direction of the negative electrode current collector, and the negative electrode film layer is disposed on either or both of the two opposite surfaces of the negative electrode current collector.

In some implementations, the negative electrode current collector may be a metal foil or a composite current collector. For example, a copper foil may be used as the metal foil. The composite current collector may include a polymer material base and a metal layer formed on at least one surface of the polymer material substrate. The composite current collector may be formed by forming a metal material on the polymer material substrate. Optionally, the metal material includes at least one of copper, copper alloy, nickel, nickel alloy, titanium, titanium alloy, silver, and silver alloy. The polymer material substrate includes at least one of polypropylene (PP), polyethylene terephthalate (PET), polybutylene terephthalate (PBT), polystyrene (PS), and polyethylene (PE).

In some implementations, the negative electrode active material may be a negative electrode active material that is known in the art and that is used in a battery. In an example, the negative electrode active material may include at least one of the following materials: artificial graphite, natural graphite, soft carbon, hard carbon, a silicon-based material, a tin-based material, and lithium titanate. The silicon-based material may be selected from at least one of a silicon elementary substance, a silicon oxide, a silicon carbon composite, a silicon nitrogen composite, and silicon alloy. The tin-based material may be selected from at least one of a tin elementary substance, a tin oxide, and tin alloy. However, this application is not limited to these materials, and another conventional material that can be used as a negative electrode active material of a battery may alternatively be used. Only one of these negative electrode active materials may be used, or two or more of these negative electrode active materials may be used in combination. A weight ratio of the negative electrode active material in the negative electrode film layer is 70 weight% to 100 weight% based on a total weight of the negative electrode film layer.

In some implementations, the negative electrode film layer optionally further includes a binder. The binder may be selected from at least one of styrene-butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). A weight ratio of the binder in the negative electrode film layer is 0 weight% to 30 weight% based on the total weight of the negative electrode film layer.

In some implementations, the negative electrode film layer optionally further includes a conductive agent. The conductive agent may be selected from at least one of superconducting carbon, acetylene black, carbon black, Ketjen black, a carbon dot, a carbon nanotube, graphene, and a carbon nanofiber. A weight ratio of the conductive agent in the negative electrode film layer is 0 weight% to 20 weight% based on the total weight of the negative electrode film layer.

In some implementations, the negative electrode film layer optionally further includes another auxiliary, such as a thickener. A weight ratio of the another auxiliary in the negative electrode film layer is 0 weight% to 15 weight% based on the total weight of the negative electrode film layer. Optionally, the thickener includes carboxymethyl cellulose sodium (CMC-Na).

In some implementations, the negative electrode plate may be prepared in the following manner: The foregoing components for preparing the negative electrode plate, such as the negative electrode active material, the conductive agent, the binder, and any other components were dispersed in a solvent, to form negative electrode slurry. Optionally, the solvent included deionized water. A solid content of the negative electrode slurry was 30 wt% to 70 wt%, and a viscosity of the negative electrode slurry at a room temperature was adjusted to 2000 mPa·s to 10000 mPa·s. The obtained negative electrode slurry was applied on the negative electrode current collector, dried, and cold-pressed, for example, rolled, to obtain the negative electrode plate. A unit coating surface density of negative electrode powders was 75 mg/m² to 220 mg/m². A compaction density of the negative electrode plate was 1.2 g/cm³ to 2.0 g/cm³.

It may be understood that the negative electrode plate in this embodiment of this application may be made by using the foregoing negative electrode plate as a negative electrode plate body and forming a solid electrolyte interphase film on a surface of the negative electrode plate body.

### Electrolyte

The electrolyte transmits an ion between the positive electrode plate and the negative electrode plate. A type of the electrolyte is not specifically limited in this application, and may be selected based on a requirement. For example, the electrolyte may be in a liquid state, a gel state, or an all-solid state.

In some implementations, the electrolyte is an electrolyte solution. The electrolyte solution includes electrolyte salt and a solvent.

In some implementations, the electrolyte salt may be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium triflate (LiTFS), lithium difluorooxalate borate (LiDFOB), lithium bis(oxalato)borate (LiBOB), lithium difluorophosphate (LiPO₂F₂), lithium difluorobis(oxalato)phosphate (LiDFOP), and lithium tetrafluoro(oxalato)phosphate (LiTFOP). A concentration of the electrolyte salt is usually 0.5 mol/L to 5 mol/L.

In some implementations, the solvent may be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfoxide (EMS), and diethyl sulfone (ESE).

In some implementations, the electrolyte solution optionally further includes an additive. For example, the additive may include a negative electrode film-forming additive and a positive electrode film-forming additive, and may further include an additive that can improve some performance of the battery, for example, an additive that improves overcharging performance of the battery, or an additive that improves high-temperature or low-temperature performance of the battery.

### Separator

In some implementations, the secondary battery further includes a separator. A type of the separator is not specifically limited in this application, and any known separator that has good chemical stability and mechanical stability and that has a porous structure may be selected.

In some implementations, a material of the separator may be selected from at least one of a glass fiber, non-woven fabric, polyethylene, polypropylene, and polyvinylidene fluoride. The separator may be a single-layer film, or may be a multilayer composite film, and is not specifically limited. When the separator is a multilayer composite film, materials of the layers may be the same or different, and are not specifically limited.

In some implementations, the positive electrode plate, the negative electrode plate, and the separator may be made into an electrode assembly by using a winding process or a laminating process.

In some implementations, the secondary battery may include outer packaging. The outer packaging may be configured to encapsulate the electrode assembly and the electrolyte.

In some implementations, the outer packaging of the secondary battery may be a hard shell, for example, a hard plastic case, an aluminum shell, or a steel shell. The outer packaging of the secondary battery may alternatively be flexible packaging, for example, bag-type flexible packaging. A material of the flexible packaging may be plastic. Polypropylene, polybutylene terephthalate, polybutylene succinate, and the like may be listed as the plastic. A shape of the secondary battery is not specifically limited in this application, and the secondary battery may be cylindrical, cuboid, or in any other shape. For example, FIG. 2 shows a secondary battery 5 having a cuboid structure as an example.

In some implementations, referring to FIG. 3, outer packaging may include a housing 51 and a cover plate 53. The housing 51 may include a bottom plate and a side plate connected to the bottom plate. The bottom plate and the side plate enclose to form an accommodation cavity. The housing 51 has an opening communicating with the accommodation cavity, and the cover plate 53 can cover the opening, to seal the accommodation cavity. The positive electrode plate, the negative electrode plate, and the separator may form an electrode assembly 52 by using a winding process or a laminating process. The electrode assembly 52 is encapsulated in the accommodation cavity. An electrolyte solution infiltrates into the electrode assembly 52. A quantity of electrode assemblies 52 included in the secondary battery 5 may be one or more, and may be selected by a person skilled in the art based on a specific actual requirement.

In addition, this application further provides a power consuming apparatus. The power consuming apparatus includes the secondary battery provided in this application. The secondary battery may serve as a power supply of the power consuming apparatus, or may serve as an energy storage unit of the power consuming apparatus. The power consuming apparatus may include a mobile device (for example, a mobile phone or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship, a satellite, an energy storage system, or the like, but is not limited thereto.

A secondary battery may be selected based on a use requirement of the power consuming apparatus.

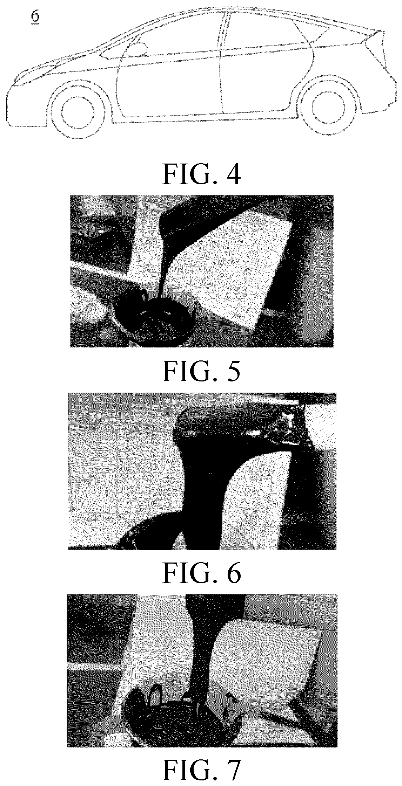

FIG. 4 shows a power consuming apparatus as an example. The power consuming apparatus is a pure electric vehicle, a hybrid electric vehicle, a plug-in hybrid electric vehicle, or the like. To satisfy a requirement of the power consuming apparatus for high power and high energy density of a secondary battery, a battery pack or a battery module may be used.

In another example, the apparatus may be a mobile phone, a tablet computer, or a notebook computer. The apparatus usually needs to be light and thin, and a secondary battery may be used as a power supply.

To make the technical problem resolved in this application, the technical solution, and the beneficial effect clearer, this application is further described in detail with reference to the embodiments and the accompanying drawings. It is clear that the described embodiments are a part of the embodiments of this application, rather than all of the embodiments. The following descriptions of at least one exemplary embodiment are actually merely illustrative, and are not intended to limit this application and application thereof. All other embodiments obtained by a person of ordinary skill in the art based on embodiments of this application without creative efforts shall fall within the protection scope of this application.

Where specific techniques or conditions are not specified in the examples, the techniques or conditions described in the literatures of the art or the product specifications are followed. Where no manufacturer is indicated for the reagents or instruments used, they are conventional products that can be commercially obtained.

### Example 1

A positive electrode active material in this example is LiNi_{0.9}Co_{0.05}Mn_{0.05}O₂. An initial lithium impurity content of the positive electrode active material is 0.55%, and a material of a cladding layer is a sulfur elementary substance. A percentage for which a mass of the sulfur elementary substance accounts in a total mass of the positive electrode active material and the cladding layer is 0.5%. Dv50 of the sulfur elementary substance is 1 µm. The positive electrode active material is primary particles and secondary particles. Dv50 of the primary particle is 5 µm, Dv50 of the secondary particle is 15 µm, and a mass ratio of the primary particles to the secondary particles is 2:8.

### (1) Preparation method for a positive electrode material in this example:

The positive electrode active material and the material of the cladding layer were mixed, and ball milling was performed at a rotational speed of 200 r/min. Dv50 of a mixed material after the ball milling was 17.9 µm. Then, the mixed material after the ball milling was sintered in a tube furnace by using argon as a protective atmosphere, where a sintering temperature is 300°C, and sintering duration is 5 h. After the sintering was completed, a temperature was reduced to a room temperature, to obtain the positive electrode material.

### (2) Preparation method for positive electrode slurry in this example:

The positive electrode material, a conductive agent carbon black, a binder polyvinylidene fluoride (PVDF), and a carbon nanotube (CNT) were dryly stirred and uniformly mixed according to a weight ratio of 77.3:10:8.7:2.7:1.3, were stirred and mixed under a condition that a rotational speed is 400 revolutions/second (r/s) to 1000 r/s, and were then wetted, kneaded, and dispersed to obtain the positive electrode slurry. The positive electrode slurry in this example is shown in FIG. 5.

### (3) Preparation method for a positive electrode plate in this example:

The positive electrode slurry was applied on an aluminum foil, and was then dried, cold-pressed, and slit to obtain the positive electrode plate.

### (4) Preparation method for a negative electrode plate in this example:

After a negative electrode active material artificial graphite, a conductive agent carbon black, a binder styrene-butadiene rubber (SBR), a thickener carboxymethyl cellulose sodium (CMC-Na) were dryly and uniformly mixed according to a weight ratio of 96.85:1.15:0.8:1.2, deionized water was added and uniformly mixed to prepare negative electrode slurry. The negative electrode slurry was uniformly applied on a negative electrode current collector copper foil, and was then dried, cold-pressed, and slit to obtain the negative electrode plate.

### (5) Preparation method for an electrolyte solution in this example:

In an argon atmosphere glove box (where H₂O<0.01 parts per million (PPM), and O₂<0.01 ppm), organic solvents ethylene carbonate and ethyl methyl carbonate were uniformly mixed according to a volume ratio of 4:6, and 12.5% LiPF₆ lithium salt was dissolved in the organic solvents and uniformly stirred, to obtain the electrolyte solution.

### (6) In this example, a polyethylene film is used as a separator.

### (7) Preparation method for a battery in this example:

The positive electrode plate, the separator, and the negative electrode plate were laminated in sequence, so that the separator was located between the positive electrode plate and the negative electrode plate, and winding was performed to obtain a bare cell. The bare cell was disposed in battery outer packaging, and then was injected with the electrolyte solution, encapsulated, allowed to stand, formed, shaped, and tested for a capacity, to complete preparation of a lithium-ion battery. The lithium-ion battery had a thickness of 4.2 millimeters (mm), a width of 32 mm, and a length of 82 mm. The formation was performed in a formation machine, a cut-off voltage of the formation was 4 V, and a forming current was 0.1 C.

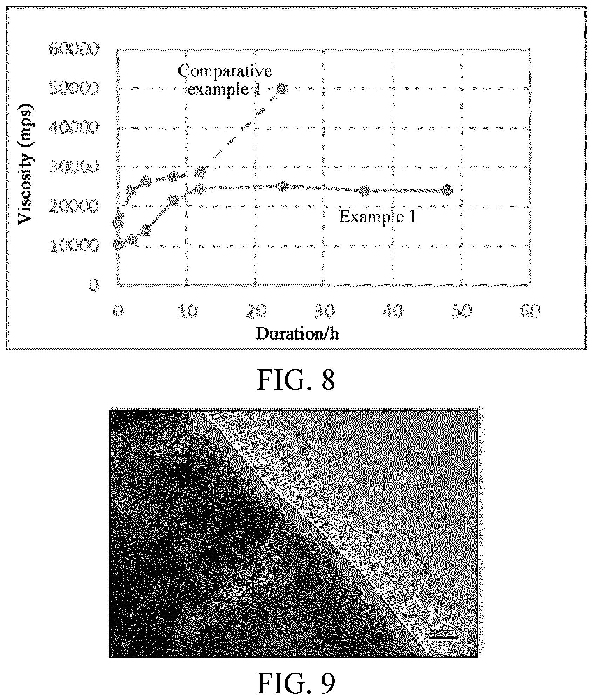

FIG. 9 shows a TEM image of a positive electrode plate after formation in this example. It can be learned from FIG. 9 that an electrolyte interphase film with a thickness of 15 nm is formed on a surface of an active material of the positive electrode plate.

### Example 2 to Example 11

In comparison with Example 1, differences of Example 2 to Example 11 lie in that the material of the cladding layer and/or the positive electrode active material and/or the mass percentage of the cladding layer and/or the cut-off voltage of the formation are shown in Table 1.

In Example 5, a mass ratio of sulfur to selenium in the material of the cladding layer is 1:1. In Example 6, a mass ratio of sulfur to tellurium in the material of the cladding layer is 1:1. In Example 7, a mass ratio of selenium to tellurium in the material of the cladding layer is 1:1. In Example 7, a mass ratio of sulfur to selenium to tellurium in the material of the cladding layer is 1:1:1.

### Example 12

In comparison with Example 1, a difference of Example 12 lies in that the mass percentage of the cladding layer is 0.1%. Positive electrode slurry in Example 12 is shown in FIG. 7.

### Example 13

In comparison with Example 1, a difference of Example 13 lies in that the cut-off voltage of the formation treatment is 3.7 V.

### Example 14

In comparison with Example 1, a difference of Example 14 lies in that a particle size of the material of the cladding layer is 2 µm.

### Example 15

In comparison with Example 1, a difference of Example 15 lies in that a particle size of the material of the cladding layer is 3 µm.

### Example 16

In comparison with Example 1, a difference of Example 16 lies in that Dv50 of the mixed material after the ball milling is 25 µm.

### Example 17

In comparison with Example 1, a difference of Example 17 lies in that the Dv50 of the mixed material after the ball milling is 5 µm.

### Comparative example 1

In comparison with Example 1, a difference of the comparative example 1 lies in that no material of the cladding layer is added. Positive electrode slurry in the comparative example 1 is shown in FIG. 6.

### Comparative example 2

In comparison with Example 1, a difference of the comparative example 2 lies in that no material of the cladding layer is added to the positive electrode material. In addition, a preparation method for a negative electrode plate is as follows.

After a negative electrode active material artificial graphite, a conductive agent carbon black, a binder styrene-butadiene rubber (SBR), a thickener carboxymethyl cellulose sodium (CMC-Na) were dryly and uniformly mixed according to a weight ratio of 96.85:1.15:0.8:1.2, a sulfur elementary substance with a mass percentage of 0.5% was added, and then deionized water was added and uniformly mixed to prepare negative electrode slurry. The negative electrode slurry was uniformly applied on a negative electrode current collector copper foil, and was then dried, cold-pressed, and slit to obtain the negative electrode plate.

### Comparative example 3

In comparison with the comparative example 2, a difference of the comparative example 3 lies in that the negative electrode active material is graphite and SiOₓ, where 0<x<2, and a mass percentage of SiOₓ is 10%.

### Comparative example 4

In comparison with the comparative example 2, a difference of the comparative example 4 lies in that the positive electrode active material is different.

### Comparative example 5

In comparison with Example 1, a difference of the comparative example 5 lies in:
Preparation method for positive electrode slurry:
The positive electrode material, a sulfur elementary substance, a conductive agent carbon black, a binder polyvinylidene fluoride (PVDF), and a carbon nanotube (CNT) were dryly stirred and uniformly mixed, were stirred and mixed under a condition that a rotational speed is 400 r/s to 1000 r/s, and were then wetted, kneaded, and dispersed to obtain the positive electrode slurry.

### Comparative example 6

In comparison with Example 1, a difference of the comparative example 6 lies in that the positive electrode active material is LiNi_{0.6}Co_{0.2}Mn_{0.2}O₂, and the initial lithium impurity content of the positive electrode active material is 0.06%.

**Table 1**

| Serial number | Material of a cladding layer | Positive electrode active material | Negative electrode active material | Dv50 (µm) of the material of the cladding layer | Mass percentage of the material of the cladding layer | Formation cut-off voltage (V) | Lithium impurity content (wt%) of the active material after battery formation | Direct-current internal resistance (mΩ) | Capacity retention rate at 0.33 C (500 cycles) | Capacity retention rate of storage at 60°C (100 days) |
|---|---|---|---|---|---|---|---|---|---|---|
| Example 1 | Sulfur | LiNi_{0.9}Co_{0.05}Mn_{0.05}O₂ | Graphite | 1 | 0.5 wt% | 4 | 0.025 | 20.1 | 96.50% | 93.50% |
| Example 2 | Sulfur | LiNi_{0.9}Co_{0.05}Mn_{0.05}O₂ | Graphite | 1 | 2 wt% | 4 | 0.027 | 21.7 | 95.70% | 90.40% |
| Example 3 | Selenium | LiNi_{0.9}Co_{0.05}Mn_{0.05}O₂ | Graphite | 1 | 0.5 wt% | 4 | 0.029 | 19.8 | 96.60% | 93.80% |
| Example 4 | Tellurium | LiNi_{0.9}Co_{0.05}Mn_{0.05}O₂ | Graphite | 1 | 0.5 wt% | 4 | 0.031 | 19.7 | 96.70% | 93.40% |
| Example 5 | Sulfur and selenium | LiNi_{0.9}Co_{0.05}Mn_{0.05}O₂ | Graphite | 1 | 0.5 wt% | 4 | 0.028 | 19.3 | 96.60% | 93.60% |
| Example 6 | Sulfur and tellurium | LiNi_{0.9}Co_{0.05}Mn_{0.05}O₂ | Graphite | 1 | 0.5 wt% | 4 | 0.03 | 19.1 | 96.80% | 93.50% |
| Example 7 | Selenium and tellurium | LiNi_{0.9}Co_{0.05}Mn_{0.05}O₂ | Graphite | 1 | 0.5 wt% | 4 | 0.035 | 19.4 | 96.70% | 93.70% |
| Example 8 | Sulfur, selenium, and tellurium | LiNi_{0.9}Co_{0.05}Mn_{0.05}O₂ | Graphite | 1 | 0.5 wt% | 4 | 0.033 | 18.8 | 96.90% | 93.90% |
| Example 9 | Sulfur | LiNi_{0.9}Co_{0.05}Mn_{0.05}O₂ | Graphite+10% SiOₓ | 1 | 0.5 wt% | 4 | 0.041 | 20.7 | 94.50% | 93.20% |
| Example 10 | Sulfur | LiNi_{0.9}Co_{0.05}Mn_{0.05}O₂ | Graphite | 1 | 0.5 wt% | 3.8 | 0.115 | 21.2 | 94.90% | 92.10% |
| Example 11 | Sulfur | LiNi_{0.9}Co_{0.05}Mn_{0.05}O₂ | Graphite | 1 | 5 wt% | 4 | 0.043 | 24.6 | 93.90% | 87.70% |
| Example 12 | Sulfur | LiNi_{0.9}Co_{0.05}Mn_{0.05}O₂ | Graphite | 1 | 0.1 wt% | 4 | 0.293 | 22.9 | 93.60% | 91.10% |
| Example 13 | Sulfur | LiNi_{0.9}Co_{0.05}Mn_{0.05}O₂ | Graphite | 1 | 0.5 wt% | 3.7 | 0.102% | 23.1 | 93.8% | 91.5% |
| Example 14 | Sulfur | LiNi_{0.9}Co_{0.05}Mn_{0.05}O₂ | Graphite | 2 | 0.5 wt% | 4 | 0.031% | 21.1 | 96.2% | 93.1% |
| Example 15 | Sulfur | LiNi_{0.9}Co_{0.05}Mn_{0.05}O₂ | Graphite | 3 | 0.5 wt% | 4 | 0.039% | 21.9 | 95.9% | 92.8% |
| Example 16 | Sulfur | LiNi_{0.9}Co_{0.05}Mn_{0.05}O₂ | Graphite | 1 | 0.5 wt% | 4 | 0.032% | 20.9 | 96.0% | 92.9% |
| Example 17 | Sulfur | LiNi_{0.9}Co_{0.05}Mn_{0.05}O₂ | Graphite | 1 | 0.5 wt% | 4 | 0.031% | 20.7 | 95.8% | 93.0% |
| Comparative example 1 | / | LiNi_{0.9}Co_{0.05}Mn_{0.05}O₂ | Graphite | 1 | / | 4 | 0.524 | 26.9 | 88.9% | 89.2% |
| Comparative example 2 | / | LiNi_{0.9}Co_{0.05}Mn_{0.05}O₂ | Graphite | 1 | / | 4 | 0.518 | 25.1 | 90.20% | 89.50% |
| Comparative example 3 | / | LiNi_{0.9}Co_{0.05}Mn_{0.05}O₂ | Graphite+10% SiOₓ | 1 | / | 4 | 0.521 | 27.1 | 87.30% | 87.60% |
| Comparative example 4 | / | LiNi_{0.6}Co_{0.2}Mn_{0.2}O₂ | Graphite | 1 | / | 4 | 0.056 | 22.5 | 95.40% | 94.30% |
| Comparative example 5 | / | LiNi_{0.9}Co_{0.05}Mn_{0.05}O₂ | Graphite | 1 | / | 4 | 0.063 | 21.9 | 95.2% | 92.9% |
| Comparative example 6 | Sulfur | LiNi_{0.6}Co_{0.2}Mn_{0.2}O₂ | Graphite | 1 | 0.5 wt% | 4 | 0.039 | 20.5 | 97.70% | 95.10% |

In Table 1, test methods are as follows:
(1) A test method for a lithium impurity content is as follows:
   Pre-treatment: An active layer of a positive electrode after formation is scraped and ground into powders, 30 grams (g) of the powders having any particle size are weighted, 100 milliliters (ml) of pure water is added, and the powders and the water are stirred for 30 minutes (min). Filtrate with a specific amount is removed after the powders and the water are allowed to stand for 10 min and filtrated.

Test: A hydrochloric acid standard solution of 0.05 mole/litre (mol/L) is selected, a bubble in a burette is drained through drainage, and a potentiometric titrator 905 is selected to start automatic detection. A corresponding result is read, and a repeated test is subsequently performed.

It may be understood that, for the initial lithium impurity content of the positive electrode active material, the positive electrode active material may be ground into powders and a test is performed according to the foregoing method.

(2) A test method for a direct-current internal resistance is as follows: At 25°C, a lithium-ion battery is charged to 4.25 V at a constant current of 0.33 C, then charged at a constant voltage of 4.25 V until a current is less than 0.05 C, and then discharged at 0.33 C for 30 min, that is, a capacity of a cell is adjusted to 50% SOC. Then, positive and negative test leads of a TH2523A alternating-current internal resistance tester respectively come into contact with positive and negative electrodes of the battery, and an internal resistance value of the battery is read by using the internal resistance tester.

(3) A test method for a capacity retention rate at 0.33 C is as follows:

At 25°C, a lithium-ion battery is charged to 4.25 V at a constant current of 0.33 C, then the lithium-ion battery is charged at a constant voltage of 4.25 V until a current is less than 0.05 C, and then the lithium-ion battery is discharged to 2.8 V at a constant current of 0.33 C. This is a charging and discharging process. In this way, charging and discharging are repeated, and a capacity retention rate of the lithium-ion battery after 500 cycles is calculated.

Capacity retention rate (%) of the lithium-ion battery after 500 cycles at 25°C=(discharging capacity in the 500^{th} cycle/discharging capacity in the 1^{st} cycle)×100%.

(4) A test method for a capacity retention rate of storage at 60°C is as follows:

Before storage, at 25°C, a battery is charged to 4.25 V at a constant current of 1/3 C, then charged to 0.05 C at a constant voltage of 4.25 V, allowed to stand for 30 min, and then discharged to 2.8 V at 1/3 C. An obtained capacity is recorded as an initial capacity C0. After the battery is stored for 100 days at 60°C, a temperature of the battery is cooled to a room temperature. The foregoing steps are repeated, and a measured capacity is recorded as Cr. In this case, battery capacity recovery rate H after the battery is stored for 100 days=Cr/C0*100%.

It can be learned from Table 1 that introduction of the cladding layer to the positive electrode material helps reduce a lithium impurity content on a surface of the positive electrode active material, and improve cycle performance of the battery. In addition, it can be learned from FIG. 5 to FIG. 8 that introducing the cladding layer and controlling an addition amount of the cladding layer help improve flowability of the positive electrode slurry and stability of a viscosity.

It can be learned from the comparative example 6 and Example 1 that the battery corresponding to the positive electrode active material LiNi_{0.6}Co_{0.2}Mn_{0.2}O₂ has a higher capacity retention rate than that of the battery corresponding to the positive electrode active material LiNi_{0.9}Co_{0.05}Mn_{0.05}O₂. A possible reason is that a capacity retention rate corresponding to the positive electrode active material LiNi_{0.6}Co_{0.2}Mn_{0.2}O₂ is slightly higher than that corresponding to the positive electrode active material LiNi_{0.9}Co_{0.05}Mn_{0.05}O₂.

In addition, it can be learned from the comparative example 6, the comparative example 4, Example 1, and the comparative example 1 that, in comparison with the results of Example 1 and the comparative example 1, the capacity retention rate of the battery in the comparative example 6 is slightly improved in comparison with the capacity retention rate of the battery in the comparative example 4. A reason may be that an initial lithium impurity content of the positive electrode active material LiNi_{0.6}Co_{0.2}Mn_{0.2}O₂ is less than an initial lithium impurity content of the positive electrode active material LiNi_{0.9}Co_{0.05}Mn_{0.05}O₂. The introduction of the material of the cladding layer slightly improves cycle performance of the battery corresponding to the positive electrode active material LiNi_{0.6}Co_{0.2}Mn_{0.2}O₂.

Technical features of the foregoing embodiments may be combined in different manners to form other embodiments. To make the descriptions simple, not all possible combinations of the technical features in the foregoing embodiments are described. However, provided that there is no conflict in the combinations of these technical features, the combinations are to be considered as falling within the scope recorded in this specification.

The foregoing embodiments show only several implementations of this application, and are described in detail, but are not to be construed as a limitation on the patent scope of the present invention. For a person of ordinary skill in the art, several variations and improvements may be made without departing from the idea of this application. These variations and improvements all fall within the protection scope of this application. Therefore, the protection scope of this application is subject to the claims.

## Claims

1. A positive electrode material, comprising a positive electrode active material and a cladding layer located on at least a part of a surface of the positive electrode active material, wherein the positive electrode active material comprises a material whose chemical formula is LiNi₁₋ₓMₓO₂, 0≤x≤0.2, M comprises at least one of Co, Mn, Al, Fe, Cu, and V, and the cladding layer comprises at least one of a sulfur element, a selenium element, and a tellurium element.

2. The positive electrode material according to claim 1, wherein the positive electrode active material satisfies at least one of the following features:
(1) 0≤x≤0.1;
(2) M comprises Co and Mn, wherein
optionally, an atomic ratio of Co to Mn is equal to 1:1;
(3) a lithium impurity content of the positive electrode active material is 0.5% to 0.7%, wherein
optionally, the lithium impurity content of the positive electrode active material is 0.55% to 0.65%; and
(4) the positive electrode active material comprises primary particles and secondary particles obtained through agglomeration of the primary particles, wherein
optionally, Dv50 of the primary particle is 3 µm to 10 µm, and Dv50 of the secondary particle is 5 µm to 20 µm, and
optionally, a mass ratio of the primary particles to the secondary particles is 1:9 to 4:6.

3. The positive electrode material according to claim 1 or 2, wherein the cladding layer satisfies at least one of the following features:
(1) the cladding layer comprises at least one of a sulfur elementary substance, a selenium elementary substance, and a tellurium elementary substance;
(2) a thickness of the cladding layer is 100 nm to 1000 nm; and
(3) a percentage for which a mass of the cladding layer accounts in a total mass of the positive electrode active material and the cladding layer is 0.01% to 6%, wherein
optionally, the percentage for which the mass of the cladding layer accounts in the total mass of the positive electrode active material and the cladding layer is 0.1% to 1%.

4. A preparation method for a positive electrode material, comprising the following steps:
mixing a positive electrode active material with a material of a cladding layer, to obtain a mixed material, wherein the positive electrode active material comprises a material whose chemical formula is LiNi₁₋ₓMₓO₂, 0≤x≤0.2, M comprises at least one of Co, Mn, Al, Fe, Cu, and V, and the material of the cladding layer comprises at least one of a sulfur element, a selenium element, and a tellurium element; and
performing sintering treatment on the mixed material in an atmosphere of protective gas.

5. The preparation method for a positive electrode material according to claim 4, wherein the sintering treatment satisfied at least one of the following features:
(1) a sintering temperature of the sintering treatment was 250°C to 350°C; and
(2) sintering duration of the sintering treatment was 3 h to 10 h.

6. The preparation method for a positive electrode material according to claim 4 or 5, wherein Dv50 of the material of the cladding layer was less than or equal to 2 µm.

7. The preparation method for a positive electrode material according to any one of claims 4 to 6, wherein before the performing sintering treatment on the mixed material, the preparation method further comprises:
performing grinding treatment on the mixed material, wherein
optionally, Dv50 of a mixed material obtained after the grinding treatment was 10 µm to 20 µm.

8. A positive electrode plate, comprising a positive electrode current collector and a positive electrode film layer located on at least one surface of the positive electrode current collector, wherein the positive electrode film layer comprises the positive electrode material according to any one of claims 1 to 3 or a positive electrode material prepared by using the preparation method for a positive electrode material according to any one of claims 4 to 7.

9. A secondary battery, comprising the positive electrode plate according to claim 8, wherein a surface of a positive electrode active material of the positive electrode plate has an electrolyte interphase film, and the electrolyte interphase film comprises at least one of lithium sulfate, lithium selenide, and lithium tellurate.

10. The secondary battery according to claim 9, wherein a thickness of the electrolyte interphase film is 5 nm to 20 nm.

11. A preparation method for a secondary battery, comprising the following steps:
performing formation treatment on a secondary-battery preform on which the positive electrode plate according to claim 8 is assembled, to form an electrolyte interphase film on a surface of a positive electrode active material of the positive electrode plate, wherein the electrolyte interphase film comprises at least one of lithium sulfate, lithium selenide, and lithium tellurate.

12. The preparation method for a secondary battery according to claim 11, wherein the formation treatment satisfied at least one of the following features:
(1) a cut-off voltage of the formation treatment was 3.8 V to 4.1 V; and
(2) a formation current of the formation treatment was 0.08 C to 0.15 C.

13. A power consuming apparatus, comprising the secondary battery according to either of claims 9 and 10 or a secondary battery prepared by using the preparation method for a secondary battery according to either of claims 11 and 12.
